# EUROPEAN PATENT SPECIFICATION

(11) **EP 1 472 474 B1**
(45) Date of publication and mention of the grant of the patent: **06.12.2006**
(21) Application number: 03705783.3
(22) Date of filing: 13.01.2003
(51) Int. Cl.: F16G 5/20

(54) **MULTI-RIBBED BELT WITH TIP PROFILE**
RIPPENRIEMEN MIT PROFILRIPPENENDE
COURROIE MULTI-NERVURES A PROFIL D'EXTREMITE

(30) Priority: 16.01.2002 US 349795 P
(43) Date of publication of application: 03.11.2004
(73) Proprietor: The Gates Corporation, Denver, CO 80202 (US)
(72) Inventor: CHENG, Jiangtian, Rochester Hills, MI 48307 (US)
(74) Representative: Tunstall, Christopher Stephen
(86) International application number: PCT/US2003/001238
(87) International publication number: WO 2003/062666

(56) References cited:
- EP-A- 0 034 225
- EP-A- 1 167 814
- US-A- 2 054 619
- US-A- 2 214 098
- US-A- 2 361 645
- US-A- 4 904 232
- US-A- 4 944 717
- US-A- 5 492 507

## Description

### Field of the Invention

The invention relates to a multi-ribbed belt, and more particularly to a multi-ribbed belt having an improved rib tip profile and a reduced contact normal force.

### Background of the Invention

Multi-ribbed belts generally comprise an elastomeric body having a tensile cord embedded therein. The body further comprises parallel ribs extending in a longitudinal direction. Each rib engages a pulley groove by which a torque is transmitted.

Prior art ribs have a profile describing an included angle. A rib end or top is flat, is concave or may extend to a point.

Representative of the art is US patent no. 4,944,717 (1990) to Georget which discloses a power transmission belt having a circumferentially ribbed inner surface. The small base of each rib is constituted by a concave curved surface. The features of the present invention that are known from this document have been placed in the preamble of claim 1 appended hereto.

Also representative of the art is US patent no. 5,492,507 (1996) to Kumazaki which discloses a power transmission belt having ribs. Each rib having a curved surface between a rib side portion and a rib tip surface portion.

The prior art belt profiles do not minimize rib tip cracking caused by operational stresses. Nor do the prior art profiles maximize belt flex fatigue life under a high frictional torque.

What is needed is a multi-ribbed belt having improved belt flex fatigue. What is needed is a multi-ribbed belt having improved flex fatigue under a high frictional torque. What is needed is a multi-ribbed belt having a rib tip profile to minimize rib tip cracking. What is needed is a multi-ribbed belt having a rib tip profile to minimize rib/pulley interface contact deformation. What is needed is a multi-ribbed belt having a rib tip comprising a concave surface disposed on a flat surface between rib side surfaces. What is needed is a multi-ribbed belt having a reduced contact normal force. The present invention meets these needs.

### Summary of the Invention

The primary aspect of the invention is to provide a multi-ribbed belt having improved belt flex fatigue.

Another aspect of the invention is to provide a multi-ribbed belt having improved flex fatigue under a high frictional torque.

Another aspect of the invention is to provide a multi-ribbed belt having a rib tip profile to minimize rib tip cracking.

Another aspect of the invention is to provide a multi-ribbed belt having a rib tip profile to minimize rib/pulley interface contact deformation.

Another aspect of the invention is to provide a multi-ribbed belt having a rib tip comprising a concave surface disposed on a flat surface between rib side surfaces.

Another aspect of the invention is to provide a multi-ribbed belt having a reduced contact normal force.

Other aspects of the invention will be pointed out or made obvious by the following description of the invention and the accompanying drawings.

The invention comprises a belt as defined in claim 1 wherein a rib tip has a concave arcuate surface disposed between substantially flat surfaces, which are in turn disposed between rib side surfaces. The substantially flat surfaces are adjacent to curved surfaces which connect to rib side surfaces. The inventive rib profile and rib compound construction significantly reduce rib tip cracking, which significantly reduces belt flex fatigue under high applied frictional torque. Further, the inventive rib profile and rib compound construction significantly reduces high localized tensile stress/strain at the rib tip and highly localized shear stress at the rib flank, thereby significantly reducing rib tip cracking and rib tear off. The inventive belt also comprises a significantly reduced contact normal force, thereby increasing an operating life of the belt.

### Brief Description of the Drawings

The accompanying drawings, which are incorporated in and form a part of the specification, illustrate preferred embodiments of the present invention, and together with a description, serve to explain the principles of the invention.
Fig. 1 is a plan end view of the inventive belt.
Fig. 2 is a graph showing a reduced rib tip tensile stress/strain for the inventive rib.
Fig. 3 is a graph showing reduced high localized contact normal force distribution with optimized rib/pulley interface profile.
Fig. 4 is a cross-section of the inventive belt showing a contact normal force.

### Detailed Description of the Preferred Embodiment

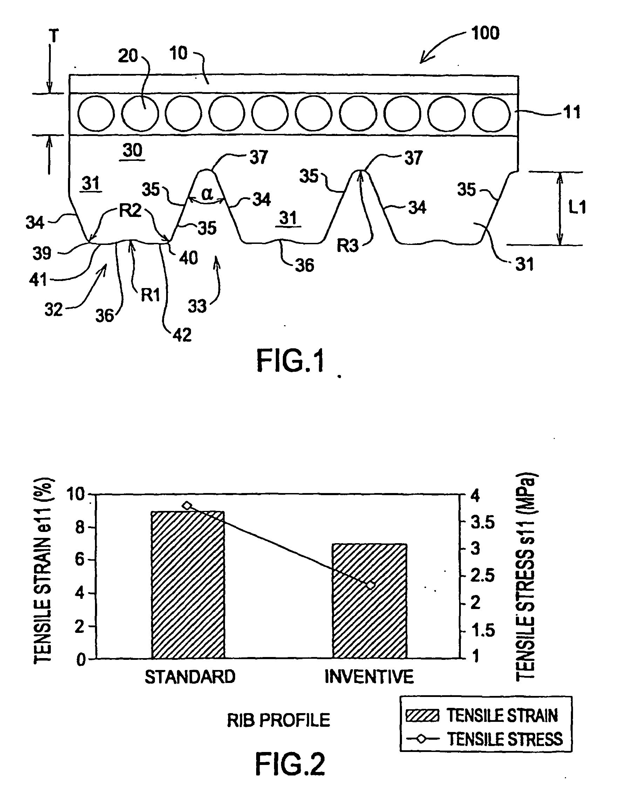

Fig. 1 is a plan end view of the inventive belt. The disclosed rib tip profile and rib construction minimizes rib tip cracking and rib/pulley interface contact deformation, and thus enhances belt flex fatigue strength in high torque applications. The inventive belt engages two or more grooved pulleys. A torque is transmitted from a driver pulley to a driven pulley by a frictional contact between a belt ribbed surface and a pulley grooved surface.

The inventive belt 100 comprises overcord layer 10, tensile cords 20, undercord 30, and ribs 31.

Nylon short fiber reinforced fabric is used for the overcord layer 10. Other fabrics which may be used for overcord layer 10 include nylon and polyester woven fabric. An overcord thickness is in the range of approximately 0.40mm to 0.55mm.

Tensile cords 20 may comprise a high modulus cord, such as aramid cords having a cord diameter of approximately 0.65mm to 0.80mm and cord spacing of approximately 22-26 epi. Cords 20 are embedded in an adhesion gum 11 having a Young's modulus in the range of approximately 40 to 60Mpa. Cords 20 may also comprise polyester cord having a cord diameter in the range of approximately 0.85 to 0.94mm and cord spacing in the range of approximately 20 to 22 epi. Cords 20 are embedded in an adhesion gum 11 with Young's modulus in the range of approximately 25 to 40Mpa. Other tensile cord materials also include aramid, polyester, nylon 4.6 or nylon 6.6 and equivalents thereof. An overall cord layer thickness T is in the range of approximately 0.75mm to 1.10mm.

Undercord 30 rib compound comprises a filler reinforced rubber compound having a cross grain modulus in the range of approximately 10 to 40 Mpa at 100°C. Filler reinforcement includes approximately 30 to 60 weight parts of silica, approximately 5 to 30 weight parts of carbon black and approximately 3 to 8 weight parts of short fibers per 100 weight parts of rubber. The filled short fibers have an average length from 1 to 6mm and are oriented in a belt width direction. The filled short fibers may comprise a synthetic material such as nylon, vinylon, polyester, aramid, or a combination of these or equivalents thereof. The filled short fibers may also comprise a natural material such as cotton, wood pulp a combination of these, or equivalents thereof. Undercord 30 may comprise any natural rubber, synthetic rubber, or any combination thereof used in the belt making arts, and equivalents thereof.

A rib 31 has a height L1 in the range of approximately 1.6mm to 2.0mm. A rib tip 32 comprises a curved surface 36 describing a sine wave shape. A rib groove 33 angle α is in the range of approximately 34° to 46°. Surface 36 describes a concave shape and has a sine wave form with the wave amplitude of approximately 0.15 to 0.50mm and the wave length of approximately 0.5 to 3.0mm and a dimension of approximately 1.3 to 1.8 mm from an arc center to the rib groove apex tip. Surface 36 may also describe a circular arc having a radius of approximately 1.2mm to 5.0mm, or may describe a parabolic shape.

Curved surfaces 39 and 40 each describe a radius R2. Surfaces 39, 40 join substantially flat surfaces 41, 42 to rib flanks 34, 35 respectively. R2 is in the range of approximately 0.20mm to 0.75mm.

Curved surface 37 having radius R3 joins adjacent rib flanks 34, 35. Surface 37 has a radius in the range of approximately 0.15mm to 0.45mm.

The inventive rib profile and rib compound construction significantly reduce rib tip cracking, which significantly reduces belt flex fatigue under high applied frictional torque. The compound comprises:

| Composition | Weight Parts |
|---|---|
| Polymer (Rubber) | 100 |
| Carbon black | 5~30 |
| Short Fiber (1~6mm) | 3~8 |
| Silica | 30~60 |
| Oil | 10 |
| AOX | 1 |
| CoAgent | 15 |
| Cure | 6 |

Further, the inventive rib profile and rib compound construction significantly reduces high localized tensile stress/strain at the rib tip and highly localized shear stress at the rib flank, thereby significantly reducing rib tip cracking and rib tear off. The smooth curved surfaces 39, 40 minimize concentrated contact deformation due to rib wedging into a pulley groove.

Fig. 2 is a graph showing a reduced rib tip tensile stress/strain for the inventive rib. In the inventive rib construction, the rib tip surface 36 contributes to minimize a rib tip high tensile stress/strain during back bending on a flat pulley. The smooth curved surfaces 39, 40, each having radius R2 minimize a concentrated contact deformation due to rib wedging into a pulley groove. Further, a flexible rib compound modulus reduces rib tip tensile stress and minimizes a rib heat generation at high RPM due to rib compound hysteresis energy loss. The rib compound cross grain modulus is approximately 32 Mpa at 100°C.

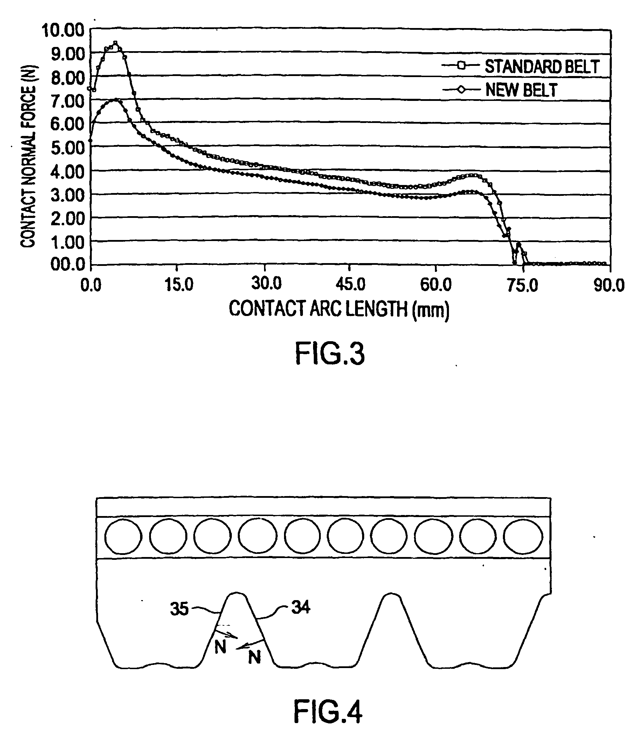

Fig. 3 is a graph showing reduced high localized contact normal force distribution with optimized rib/pulley interface profile. The inventive rib/pulley interface mismatch optimizes the contact normal force distribution along the rib flank and the belt/pulley contact arc, see Fig. 3. The pulley groove angle depicted in Fig. 3 is 40° to engage a belt having a groove angle α of 42°. This groove angle 'mismatch' minimizes a rib shear deformation and reduces rib wear due to highly localized contact normal force distribution. This in turn extends a belt life by reducing operational forces. The inventive rib/pulley groove interface also reduces a rib slip noise with the optimized rib/pulley groove mismatch.

Fig. 4 is a cross-section of the inventive belt showing a contact normal force. Normal forces N operate on rib flanks 34, 35.

Although several embodiments of the invention has been described herein, it will be obvious to those skilled in the art that variations may be made in the construction and relation of parts without departing from the spirit and scope of the invention described herein. Further, the description contained herein is exemplary only and the scope of the invention is to be limited only to the claims as interpreted in view of the prior art.

## Claims

1. A belt (100) comprising:
an elastomeric body having a tensile member (20) embedded therein and a pulley engaging surface;
the pulley engaging surface having a rib (31) extending in a longitudinal direction; and
the rib (31) having a tip (32) describing a concave surface (36);
**characterised by**:
the tip (32) also describing two substantially flat surfaces (41, 42), the concave surface (36) being disposed between the two substantially flat surfaces (41, 42).

2. The belt (100) as in claim 1 wherein the concave surface (36) comprises an arcuate surface.

3. The belt (100) as in claim 1 or claim 2, the rib (31) further comprising;
a first curved surface (39), a second curved surface (40), a first rib flank (34) and a second rib flank (35), the first and second curved surfaces (39, 40) being on either side of the substantially flat surfaces (41, 42), whereby each substantially flat surface (41, 42) is joined to one of the rib flanks (34, 35).

4. The belt (100) as in claim 3 being a multi-ribbed belt and further comprising:
a third curved surface (37) joining adjacent rib flanks (34, 35) of adjacent ribs (31);
and
an angle (α) between adjacent rib flanks (34, 35) in the range of approximately 34° to 46°.

5. The belt (100) as in claim 3 or claim 4, wherein the first curved surface (39) and the second curved surface (40) each have substantially equal radii.

6. The belt (100) as in claim 3, claim 4 or claim 5, further comprising an overcord (10) disposed opposite a rib (31) relative to the tensile member (20).

7. The belt (100) as in claim 6 wherein the overcord (10) comprises polyamide.

8. The belt (100) as in any one of claims 3 to 7, further comprising a fiber loading in the rib (31).

## Patentansprüche

1. Riemen (100) mit:
einem elastomeren Körper mit einem darin eingebetteten Zugteil (20) und mit einer Riemenscheibenangriffsfläche;
wobei die Riemenscheibenangriffsfläche eine in Längsrichtung verlaufende Rippe (31) aufweist; und
die Rippe (31) eine Spitze (32) aufweist, die eine konkave Fläche (36) beschreibt;
**dadurch gekennzeichnet, dass**:
die Spitze (32) ferner zwei im Wesentlichen flache Flächen (41,42) beschreibt, wobei die konkave Fläche (36) zwischen den beiden im Wesentlichen flachen Flächen (41,42) angeordnet ist.

2. Riemen (100) nach Anspruch 1, bei dem die konkave Fläche (36) eine bogenförmige Fläche aufweist.

3. Riemen (100) nach Anspruch 1 oder Anspruch 2, bei dem die Rippe (31) ferner aufweist:
eine erste gekrümmte Fläche (39), eine zweite gekrümmte Fläche (40), eine erste Rippenflanke (34) und eine zweite Rippenflanke (35),
wobei die ersten und die zweiten gekrümmten Flächen (39,40) auf beiden Seiten der im Wesentlichen flachen Flächen (41,42) angeordnet sind und wobei jede im Wesentlichen flache Fläche (41,42) mit einer der Rippenflanken (34,35) verbunden ist.

4. Riemen (100) nach Anspruch 3 bei Anordnung in einem Mehrfachriemen und ferner mit:
einer dritten gekrümmten Fläche (37), die benachbarte Rippenflanken (34,35) benachbarter Rippen (31) verbindet;
und
einem Winkel (α) zwischen benachbarten Rippenflanken (34,35), der in einem Bereich von ungefähr 34° bis 46° liegt.

5. Riemen (100) nach Anspruch 3 oder Anspruch 4, bei dem die erste gekrümmte Fläche (39) und die zweite gekrümmte Fläche (40) im Wesentlichen gleiche Radien haben.

6. Riemen (100) nach Anspruch 3, Anspruch 4 oder Anspruch 5, ferner mit einem Obercord (10), der relativ zu dem Zugteil (20) entgegengesetzt zu einer Rippe (31) angeordnet ist.

7. Riemen (100) nach Anspruch 6, bei dem der Obercord (10) Polyamid aufweist.

8. Riemen (100) nach einem der Ansprüche 3 bis 7, ferner mit einer Faserbeladung in der Rippe (31).

## Revendications

1. Courroie (100) comprenant :
un corps élastomère comportant un élément de tension (20) enrobé en son sein et une surface d'engagement de poulie ;
la surface d'engagement de poulie comportant une nervure (31) s'étendant dans une direction longitudinale ; et
la nervure (31) comportant une extrémité (32) décrivant une surface concave (36) ;
**caractérisée par** :
l'extrémité (32) décrivant également deux surfaces sensiblement plates (41, 42), la surface concave (36) étant disposée entre les deux surfaces sensiblement plates (41, 42).

2. Courroie (100) selon la revendication 1, dans laquelle la surface concave (36) comprend une surface arquée.

3. Courroie (100) selon la revendication 1 ou la revendication 2, la nervure (31) comprenant en outre :
une première surface incurvée (39), une deuxième surface incurvée (40), un premier flanc de nervure (34) et un deuxième flanc de nervure (35), les première et deuxième surfaces incurvées (39, 40) étant situées sur chaque côté des surfaces sensiblement plates (41, 42), de manière que chaque surface sensiblement plate (41, 42) soit reliée à l'un des flancs de nervure (34, 35).

4. Courroie (100) selon la revendication 3, étant une courroie à nervures multiples et comprenant en outre :
une troisième surface incurvée (37) reliant des flancs de nervure (34, 35) adjacents de nervures (31) adjacentes ;
et
un angle (α) entre des flancs de nervure (34, 35) adjacents dans la plage d'environ 34° à 46°.

5. Courroie (100) selon la revendication 3 ou la revendication 4, dans laquelle la première surface incurvée (39) et la deuxième surface incurvée (40) ont chacune des rayons sensiblement égaux.

6. Courroie (100) selon la revendication 3, la revendication 4, ou la revendication 5, comprenant en outre un revêtement protecteur de câbles (10) disposé à l'opposé d'une nervure (31) par rapport à l'élément de tension (20).

7. Courroie (100) selon la revendication 6, dans laquelle le revêtement protecteur de câbles (10) comprend du polyamide.

8. Courroie (100) selon l'une quelconque des revendications 3 à 7, comprenant en outre une charge de fibres dans la nervure (31).
